# EUROPEAN PATENT SPECIFICATION

(11) **EP 0 480 250 B1**
(45) Date of publication and mention of the grant of the patent: **30.11.1994**
(21) Application number: 91116367.3
(22) Date of filing: 25.09.1991
(51) Int. Cl.: B29B 7/14, H02K 15/12

(54) **Portable resin machine for on-site generator servicing**
Transportabler Kunstharzmischer zum Warten von Generatoren auf Baustellen
Mélangeur de résine synthétique pour la maintenance de générateurs sur des chantiers

(30) Priority: 10.10.1990 US 595052
(43) Date of publication of application: 15.04.1992
(73) Proprietor: WESTINGHOUSE ELECTRIC CORPORATION, Pittsburgh Pennsylvania 15222 (US)
(72) Inventor: Alkire, Gerald Ross, Winter Springs, Florida 32708 (US); Digorio, Anthony, Pensacola, Florida 32504 (US); Kane, James Thomas, Irwin, Pennsylvania 15642 (US); Morris, Robert Herschel, Alpharetta, Georgia 30201 (US)
(74) Representative: Fleuchaus, Leo, Dipl.-Ing.

(56) References cited:
- EP-A- 0 108 287
- EP-A- 0 313 396
- DE-A- 2 315 867
- DE-A- 3 023 289

## Description

This invention relates to resin machines according to the preamble of claim 1 and known from DE-A-2315867 and, more particularly, to a transportable, self-contained, enclosed resin machine according to the preamble of claim 13 and known from DE-A-302 3 289 which can be used on-site or in the factory to service electrical generators.

Resins are unique materials that, when mixed in exact proportions with a catalyst (hardener), undergo an exothermic chemical reaction leading to transformation of the resin from a liquid to a solid. To properly achieve desired hardened-resin qualities, including integrity at elevated temperatures, the resin and hardener must be homogeneously mixed. Further, mixed resins have a workable state before "setting up" or hardening, called "pot life." Pot life length is a direct function of resin and hardener temperature.

Resins are used for, among other things, servicing electrical generators, for both fossil fuel and nuclear fuel power plants. That is, during original generator manufacturing, rewinds, modifications and repairs resin is used to impregnate Dacron® fabric used to fill the spaces between generator components, as is well known in the art. The resin then bonds the components together, and becomes an integral, non-conductive supporting part of the generator.

Traditionally, the mixing of resin and hardener intended for generator servicing was performed manually. As much as 1400 quarts of resin would be hand-mixed for a typical generator rewind.

Resin mixing/dispensing machines are now replacing manual mixing because of superior quality control. These machines can produce homogeneous mixtures in any quantity.

An example of a currently available resin machine is the Triplematic™ Resin Dispenser, Series 1200, manufactured by Hardman, Incorporated, of Belleview, New Jersey. This device is an automatic metering and mixing dispenser for 2-part (resin and hardener) reaction systems.

This resin machine includes a stand on casters, a mixing chamber on the stand, separate resin and hardener tanks (each of about two gallon capacity) placed above the mixing chamber, a control panel, a pump to move the resin and hardener from the respective tanks to a mixing chamber connected to a hose terminating at a free end in a spout dispenser, or to a dynamic mixing head, and a foot pedal to regulate mixture flow.

The device portions the proper quantities of resin and hardener according to a fixed ratio, and pumps these materials into the mixing chamber or mixing head where they are intimately mixed, and dispensed as needed. The timer automatically dispenses any unused mixture into a waste container to prevent the mixture from hardening in the mixing head.

Although resin machines have been rather widely adopted, they suffer from the following drawbacks.

The known resin machines are designed for in-factory use, where the temperature of the factory interior is controlled. In contrast, temperatures encountered on-site in a power plant commonly range between 125°F (51.7°C) daytime and 40°F (4.4°C) night-time, and even more extreme temperatures may be experienced.

Further, pot life of the mixed resin is determined by actual testing based on volume versus temperature. For a given volume at the controlled temperature of the resin and hardener the pot life (gel time) of the resin is measured. Then the pot life timer is set slightly below this time for control. Since pot life is a function of temperature, pot life may be shortened to only ten minutes or less by unfavorably high temperatures. A shortened pot life means that there may not be enough time for generator servicing.

In such high temperatures, workmen sometimes try to compensate by setting resin containers in ice to extend pot life. Such remedial measures are unreliable and inconsistent.

At low temperatures, the resin becomes more viscous and clogs the machine, requiring maintenance, and it is harder to impregnate the Dacron® fabric, thus decreasing resin strength and reliability of the generator.

For such low temperatures, resin tanks have been equipped with heater strips, but the dispensing hose is uninsulated. Further, during high volume operation, the mixed resin is used at too fast a rate to be properly heated.

Moreover, a loss of power to the machine stops the timer. As a result, when workmen at the power plant site unplug the resin machine to plug in power tools, the resin hardens inside the mixing head, which takes the device out of service and causes costly delays. The same occurs if there is a power failure at the factory.

Further, because the machine is exposed to the environment of the plant site or factory, the volatile resin and hardener create noxious fumes in the work area surrounding the machine. Of course, such fumes may be a health risk to workmen in the vicinity.

With the conventional resin machine, resin and hardener tanks are hooked up at the factory to fifty-five gallon drums of resin and hardener, respectively. The heavy fluid weight of the drums effectively prevents moving the resin machine out of the factory and onto a generator site.

Finally, even if such a machine could be removed from the factory for use on-site, the conventional resin machine would require time-consuming set-up and connection before operation.

Accordingly, it is a purpose of the present invention to provide a portable resin machine which can be used on-site at a nuclear or fossil fuel power plant.

It is another purpose of the present invention to provide a resin machine which is totally temperature controlled, despite the on-site temperature.

It is another purpose to provide a resin machine which is not effected by power losses.

It is another purpose of the present invention to provide a resin machine wherein the resin and hardener reservoirs and tanks are incorporated in the machine to facilitate portability.

It is still another purpose to provide a resin machine wherein any fumes emanating from the resin and hardener are contained and safely removed.

It is another purpose of the present invention to provide a resin machine which is easy to move, set up and operate on-site.

To achieve the foregoing and other purposes of the present invention there is provided a transportable, self-contained, enclosed, resin machine which can be used for on-site generator servicing. An enclosure maintains a temperature-controlled environment for the resin and hardener tanks, reservoirs, and the fluid connections and valves therebetween to extend resin pot life, and to make the machine usable in extreme temperatures. The device also includes a battery-powered audible alarm to signal power loss, an electronic pumping and valving system for automatic tank refilling, a venting system for removing fumes, and appropriate controls.

The major advantages of this invention include time saving, decreased generator outage time, increased resin quality control, and improved reliability of the generator.

Other features and advantages of the present invention will be apparent from the following description taken in conjunction with the accompanying drawings, in which like reference characters designate the same or similar parts throughout the figures thereof.

The accompanying drawings, which are incorporated in and constitute a part of the specification, illustrate embodiments of the invention and, together with the description, serve to explain the principles of the invention.

FIG. 1 is a front and left side perspective view of the portable resin machine according to the present invention.

FIG. 2 is a right side view of the portable resin machine according to the present invention, with several enclosure panels removed.

FIG. 3 is a top view of the resin machine according to the present invention, with several enclosure panels removed.

FIG. 4 is a schematic view of the valve and pumping system according to the present invention.

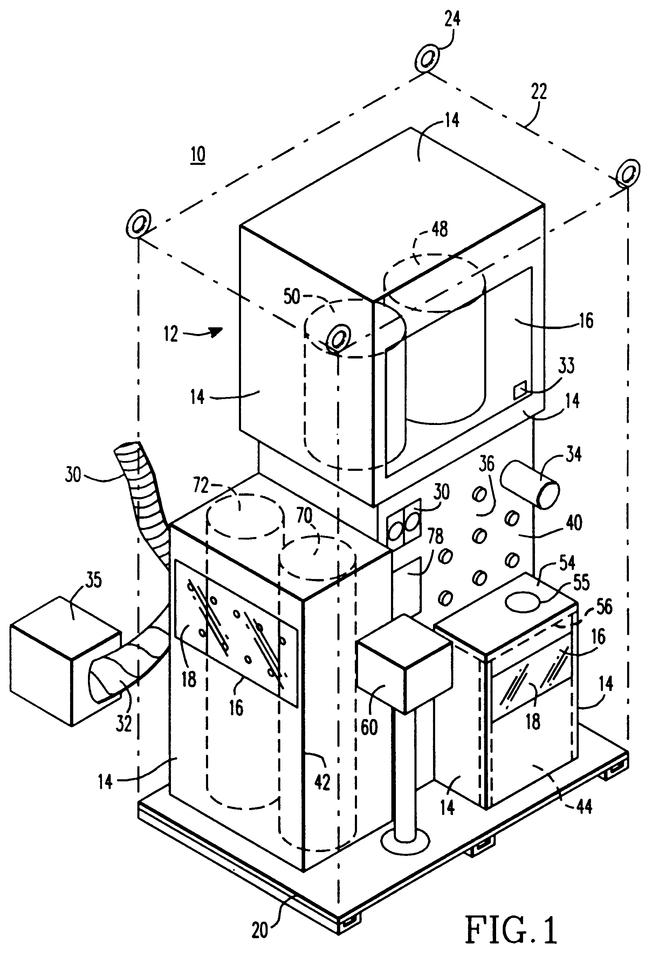

The present invention is generally a transportable, self-contained, enclosed resin machine for on-site generator servicing. In FIG. 1 the portable resin machine is referred to generally by reference numeral 10. The machine 10 basically includes an enclosure 12 made up of a plurality of panels 14.

The panels 14 are preferably vinyl and are secured with snaps or Velcro strips (not shown) for easy assembly and removal, such as during addition of resin and hardener, cleaning and maintenance. Several panels 14 of the enclosure 12 include transparent windows 16 to allow the operator to view controls 18 or operation of the machine 10.

The resin machine 10 is mounted to a steel shipping skid 20 upon which a removable shipping crate or cover 22 is placed for enclosing the machine 10. Four I-hooks 24 are used to transport the machine 10 to the site and placement by, e.g., a fork lift truck or crane (not shown). Also seen in FIG. 1 are a fumes exhaust tube 30, an air intake duct 32, a mixing head 34 and a central control panel 36 including a timer 38.

The resin machine 10, as best shown in FIGS. 1-3, also includes a first large rectangular housing 40, a second medium-rectangular housing 42, a third smaller rectangular housing 44, and a fourth, smallest housing 60.

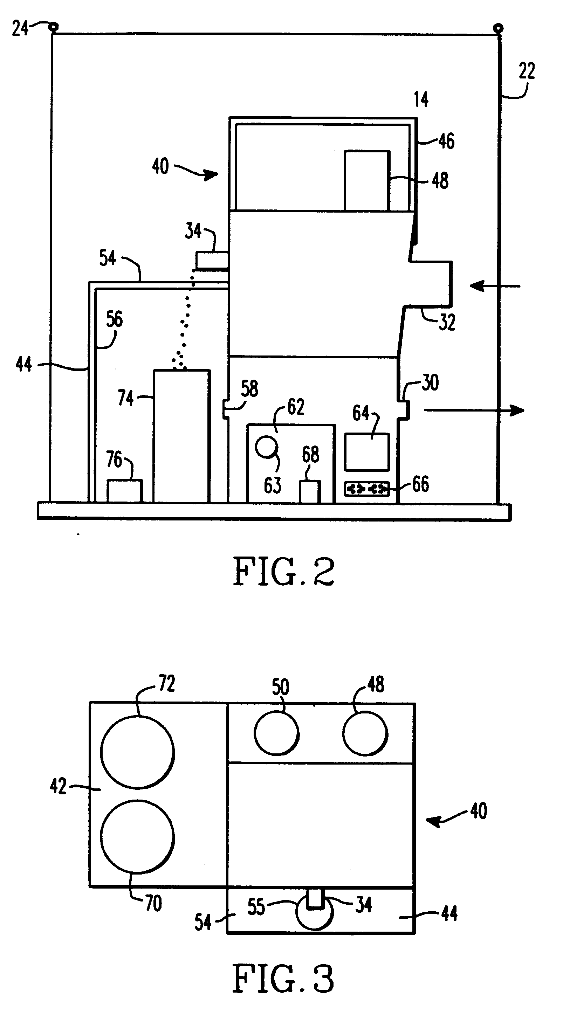

The first large housing 40 includes an upper aluminum frame 46 (FIG. 2) supporting the vinyl panels 14 and enclosing a resin tank 48 and a hardener tank 50. Each of the tanks 48 and 50 is preferably about 2 gal. capacity. These tanks 48 and 50 are connected to the mixing head 34 as described below. The first housing 40 receives the air handling duct 32.

Located within the first housing 40 is an alarm system 62. The alarm system includes a battery 68, an audible alarm 63, a relay and various on-off, re-set switches. The switches are a part of the central control panel 36. The relay is held in one position when the machine 10 is hooked up to AC power and the power is on, but moves to an opposite position, when there is a loss of power, such as when the plug is pulled, so that the alarm system 62 is powered by the battery 68. The battery 68 is re-chargeable and is charged during normal operation of the machine 10.

The battery-powered alarm system 62, signals power loss which interrupts the timer 38. The alarm system 62 also alerts the operator to power failure, to mixing head 34 motor failure, and to inadvertent power disconnect, so that unused mixing resin can be purged before it hardens in the mixing head 34.

The first housing 40 also includes a circuit breaker box 64 and a power strip 66. All 110V AC power required for support equipment (electronic calibration scale, small power tools, etc.) can be obtained from the power strip 66. Additionally, a spare parts drawer 78 is added to the first housing 40 for O-rings, gaskets, small tools, etc.

In the second housing 42, again an aluminum frame (not shown) is covered by vinyl panels 14. In the housing 42, there are located a resin reservoir 70 and a hardener reservoir 72. Each reservoir 70 and 72 is preferably 10 gallon capacity. These reservoirs 70 and 72, as well as the tanks 48 and 50, are contained within the temperature controlled enclosure 12. These reservoirs 70, 72 are connected to the tanks 48, 50, respectively, as described below.

The third housing 44 includes an exhaust outlet 58 and the table 54 welded to a stand 56. The table 54 includes a hole 55 so that waste resin can fall into the waste container 74 described below. The exhaust outlet 58 is located near the waste resin area to prevent fumes from entering the work area. Again, vinyl panels 14 extend down from the table 54. Under the table 54 there is located a waste container 74 and a foot pedal 76. The foot pedal 76 is for dispensing the mixture from the mixing head 34 and is covered to prevent accidental operation.

The fourth housing 60 for an electronic scale (not shown), is positioned in the front, to the left of a table 54. The electronic scale (not shown) is used, e.g., three times per shift for calibration of the resin machine 10.

More particularly, the scale is used to measure the resin-to-hardener ratio. Any type of scale can be used that has a resolution of .1 grams. A cup of mixed resin (resin + hardener) is weighed first by pumping off ten seconds of resin. Then the hardener is turned off to pump ten seconds of resin only. The difference between the two weights is the weight of the hardener. The ratio is calculated from the weight of resin to the weight of hardener.

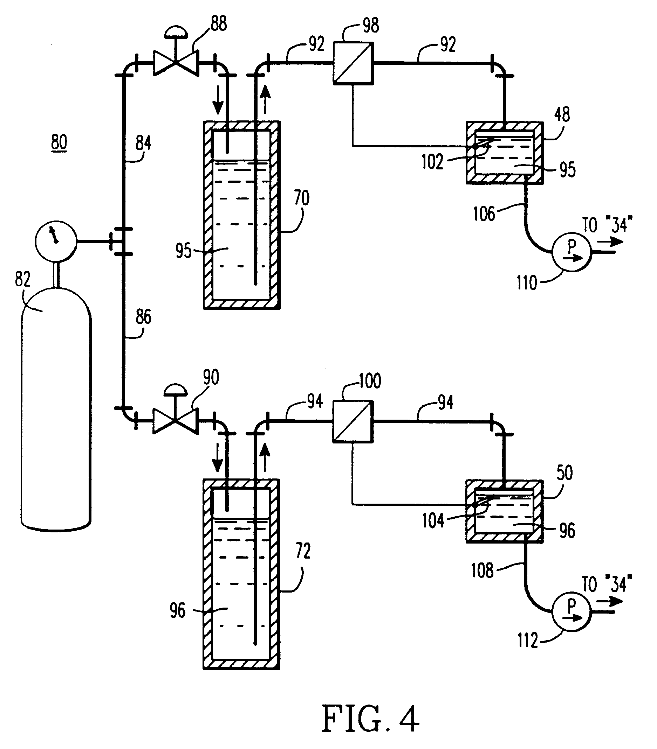

FIG. 4 illustrates an automatic electronic pumping and valving system 80 according to the present invention. A pressurized gas source 82, such as a nitrogen tank, is connected to the resin reservoir 70 and to the hardener reservoir 72 via gas lines 84 and 86, respectively. Each line 84, 86 includes a close off valve 88 and 90, respectively. These close off valves 88 and 90 can be operated independently for introducing pressurized gas into one reservoir or the other. A fluid line or hose 92 extends from the resin reservoir 70 to the resin tank 48 and a similar fluid line or hose 94 extends from the hardener reservoir 72 to the hardener tank 50. Each fluid line 92 and 94 feeds by pressure the resin 95 and hardener 96, respectively, from the reservoirs 70 and 72 to the tanks 48, 50. In each fluid line 92 and 94, there is located an electronic valve 98, 100, respectively, which controls flow. The valves 98, 100 are regulated by feedback from a float valve 102, 104 located in the tanks 48, 50, respectively. Both the resin tank 48 and the hardener tank 50 include a gravity feed line 106, 108 to conventional resin and hardener pumps 110, 112, respectfully, which lead to the mixing head 34.

The lines are equipped with quick disconnect fittings so that they can be taken off easily for cleaning after the generator servicing is complete. If quick disconnect fittings are not used, the hoses would have to be screwed on, which takes time.

The electronic pumping and valving system 80 automatically refills the resin and hardener tanks 48 and 50 from the reservoirs 70 and 72 housed within the enclosure 12 resulting in greater efficiency and less fumes. They can pump twelve gallons of resin 95 before replenishing -- more than enough for one shift. This system replaces the conventional noisy pneumatic pump that had to refill the two gallon gravity-fed tanks from fifty-five gallon drums outside the unit.

The device 10 maintains a temperature-controlled environment for the resin and hardener tanks 48 and 50, the reservoirs 70 and 72, connecting lines 84, 86, 92, 94, 106 and 108, electronic controls and the valves 88, 90, 98, 100, 102, 104, thus extending pot life. Maximized pot life means that workers have time to thoroughly impregnate the Dacron® fabric (some up to 1.92 cm thick) and other additional components, and position these within the generator spaces, thus improving strength and reliability.

Temperature controls are included in the central control panel 36. The temperature of the enclosure 12 is preferably controlled at about 70°F (21.1°C) (±1°) by a heat pump or fan driven heating/cooling unit 35 ducted into the vinyl enclosure 12 via the air handling duct 32. A thermostat 33 in the enclosure 12 provides feedback to the heating and cooling unit 35.

The improved temperature control available by using the present invention means that the resin within the resin machine 10 has optimum viscosity, and is therefore less likely to cause machine maintenance problems. Maintenance problems resulting from high temperatures, which would cause the resin to set up too quickly within the mixing head, are also avoided.

The machine 10 environment is improved by evacuating fumes from the work area through the exhaust outlet 58 mounted around the waste resin container 74.

The machine 10 of the present invention also achieves fast turn-around time needed to meet present requirements at nuclear plants to complete a generator rewind in thirty two days.

The machine 10 also eliminates extensive and time consuming set up at the customer's site. The unit is pre-assembled, including hose connections and leak testing, and is ready to use. As described, all inter-connecting hose assemblies incorporate quick-disconnects. This feature enhances set up and post-use cleaning operations.

This invention presents a professionally-packaged, efficient unit at the customer's site, regardless of site temperature.

## Claims

1. A resin machine (10), comprising: a resin source (48, 70); a hardener source (50, 72); means (34) for mixing and dispensing the resin and hardener; characterized by means (12) for enclosing the air around the resin (48, 70) and hardener sources (50, 72); and means (32, 33, 35) for controlling the temperature in the enclosure means (12).

2. The machine (10) as recited in claim 1, further characterized by a resin waste receptacle (74), an enclosure (44) for the receptacle (74) and means (30, 58) for exhausting air from within the receptacle enclosure (44).

3. The machine (10) as recited in claim 1, wherein the enclosure means (12) comprises: frame means (46) and a plurality of panels (14) attached to the frame means (46).

4. The machine (10) as recited in claim 1, wherein the temperature control means (32, 33, 35) comprises an air intake duct (32) connected between the enclosure means (12) and a heating and cooling unit (35), and a thermostat (33) within the enclosure means (12) operatively connected to the heating and cooling unit (35).

5. The machine (10) as recited in claim 1, further characterized by means (62) for providing an alarm when power to the machine (10) is cut off.

6. The machine (10) as recited in claim 5, wherein the alarm means (62) comprises: an audible alarm (63) connected to the enclosure means (12); and means (68) for providing power to the alarm means (62), wherein, when power to the machine (10) is cut off, the alarm means (62) is powered by the power means (68) and the audible alarm (63) is activated.

7. The machine (10) as recited in claim 1, further characterized by means (20, 22, 23) attached to the machine (10) for moving the machine (10).

8. The machine (10) as recited in claim 1, further characterized by means (80) for pumping and valving resin (95) and hardener (96) between the resin and hardener sources (48, 50, 70, 72) and the mixing and dispensing means (34).

9. The machine (10) as recited in claim 8, wherein the resin and hardener sources (48, 50, 70, 72) comprise a resin reservoir (70) in fluid communication with a resin tank (48) and a hardener reservoir (72) in fluid communication with a hardener tank (50).

10. The machine as recited in claim 9, wherein the pumping and valving means (80) is characterized in that a pressurized gas source (82) leading to the resin reservoir (70) and to the hardener reservoir (72) via first (84) and second lines (86), respectively, each first and second line (84, 86) including a close off valve (88, 90), respectively, which can be operated independently for introducing pressurized gas into at least one of the reservoirs (70, 72), a third line (92) extending from the resin reservoir (70) to the resin tank (48) and a forth line (94) extending from the hardener reservoir (72) to the hardener tank (50), wherein each third and fourth line (92, 94) feeds by pressure the resin (95) and hardener (96), respectively, from the reservoirs (70, 72) to the tanks (48, 50).

11. The machine (10) as recited in claim 10, wherein the pumping and valving means (80) are further characterized by an electronic valve (98, 100) in each third and fourth line (92, 94), respectively, which controls flow of the resin and hardener from the reservoirs (70, 72) to the tanks (48, 50), said valves (98, 100) being regulated, by feedback from a float valve (102, 104) located in each tank (48, 50), and the resin tank (48) and the hardener tank (50) including a gravity feed line (106, 108) to resin and hardener pumps (110, 112), respectively, which lead to the mixing and dispensing means (34).

12. The machine (10) as recited in claim 1, wherein the resin and hardener sources (48, 50, 70, 72) comprise: a resin reservoir (70) in fluid communication with a resin tank (48); and a hardener reservoir (72) in fluid communication with a hardener tank (50).

13. A portable, electrically-powered resin machine (10) to be used on-site at a power plant, comprising: a resin source (48, 70), a hardener source (50, 72), characterized by mixing and dispensing means (34), an air enclosure (12) surrounding the resin and hardener sources (48, 50, 70, 72), means (32, 33, 35) connected to the enclosure (12), for regulating the temperature within the enclosure (12), means for providing an alarm when power to the machine (10) is cut off, and means (80) for pumping and valving resin (95) and hardener (96) between the resin and hardener sources (48, 50, 70, 72) and the mixing and dispensing means (34).

## Patentansprüche

1. Eine Kunstharzmischmaschine (10) enthaltend: Eine Harzquelle (48, 70); eine Härterquelle (50, 72); Mittel (34) zum Mischen und Ausgeben des Harzes und des Härters, gekennzeichnet durch Mittel (12) zum Einschließen der Luft um die Harz- (48, 70) und Härterquelle (50, 72); und Mittel (32, 33, 35) zum Regeln der Temperatur in dem einschließenden Mittel (12).

2. Die Maschine (10) gemäß Anspruch 1, ferner gekennzeichnet durch ein Harzabfall-Aufnahmegefäß (74), eine Einschließung (44) für das Aufnahmegefäß (74) und Mittel (30, 58) zum Auspumpen der Luft aus dem Inneren der Aufnahmegefäßeinschließung (44).

3. Die Maschine (10) gemäß Anspruch 1, in der die Einschließung (12) beinhaltet: Rahmenmittel (46) und eine Vielzahl von Platten (14), die an dem Rahmenmittel (46) befestigt sind.

4. Die Maschine (10) gemäß Anspruch 1, in der das Temperaturreglermittel (32, 33, 35) einen Luftansaugstutzen (32) verbunden zwischen dem Einschließungsmittel (12) und einer Heiz- und Kühleinheit (35), und einen Thermostat (33) innerhalb des Einschließungsmittel (12) umfaßt, der in Wirkverbindung mit der Heiz- und Kühleinheit (35) steht.

5. Die Maschine (10) gemäß Anspruch 1, ferner gekennzeichnet durch Mittel (62), die Alarm geben, wenn die Stromversorgung der Maschine (10) abgeschaltet wird.

6. Die Maschine (10) gemäß Anspruch 5, in der das Alarmmittel (62) eine akustische Alarmvorrichtung (63) umfaßt, die mit dem Einschließungsmittel (12) verbunden ist; sowie Mittel (68) zur Energieversorgung des Alarmmittels (62), wobei, wenn die Energieversorgung der Maschine (10) ausfällt, das Alarmmittel (62) von dieser Energieversorgung (68) aus versorgt wird und die akustische Alarmvorrichtung (63) ausgelöst wird.

7. Die Maschine (10) gemäß Anspruch 1, ferner gekennzeichnet durch an der Maschine (10) befestigte Mittel (20, 22, 23) zum Bewegen der Maschine (10).

8. Die Maschine (10) gemäß Anspruch 1, ferner gekennzeichnet durch Mittel (80) zum Pumpen und Absperren von Harz (95) und Härter (96) zwischen Harz- und Härterquelle (48, 50, 70, 72) und den Misch- und Ausgabemitteln (34).

9. Die Maschine (10) gemäß Anspruch 8, in der die Harz- und Härterquellen (48, 50, 70, 72) einen Harzvorratsbehälter (70) in Füssigkeitsverbindung mit einem Harztank (48), und einen Härtervorratsbehälter (72) in Flüssigkeitsverbindung mit einem Härtertank (50) aufweisen.

10. Die Maschine (10) gemäß Anspruch 9, bei der die Pump- und Absperrmittel (80) dadurch gekennzeichnet sind, daß eine unter Druck stehende Gasquelle (82) über erste (84) und zweite Leitungen (86) mit dem Harzvorratsbehälter (70) bzw. dem Härtervorratsbehälter (72) verbunden ist, wobei jede dieser ersten bzw. zweiten Leitung (84, 86) ein Absperrventil (88, 90) aufweist, die unabhängig voneinander betätigt werden können, um unter Druck stehendes Gas in wenigstens einen der Vorratsbehälter (70, 72) einzuführen, eine dritte Leitung (92) sich vom Harzvorratsbehälter (70) zum Harztank (48), und eine vierte Leitung (94) sich vom Härtervorratsbehälter (72) zum Härtertank (50) erstreckt, wobei jede dieser dritten und vierten Leitung (92, 94) das Harz (95) bzw. den Härter (96) unter Druck aus den Vorratsbehältern (70, 72) in die Tanks (48, 50) leitet.

11. Die Maschine (10) gemäß Anspruch 10, bei der die Pump- und Absperrmittel (80) ferner durch je ein elektronisches Ventil (98, 100) in jeder der dritten bzw. der vierten Leitung (92, 94) gekennzeichnet sind, die den Durchsatz des Harzes bzw. des Härters aus den Vorratsbehältern (70, 72) zu den Tanks (48, 50) regeln, wobei diese Ventile (98, 100) durch eine Rückkopplung von jeweils einem Schwimmerventil (102, 104), die in jedem Tank (48, 50) angeordnet sind, gesteuert werden, und der Harztank (48) bzw. der Härtertank (50) unter Schwerkraft wirkenden Zufuhrleitungen (106, 108) zu der Harz- bzw. Härterpumpe (110, 112) aufweisen, die zum Misch- bzw. Ausgabemittel (34) führen.

12. Die Maschine (10) gemäß Anspruch 1, in der die Harz- und Härterquellen (48, 50, 70, 72) enthalten: Einen Harzvorratsbehälter (70), der in Flußverbindung mit einem Harztank (48) steht, und einen Härtervorratsbehälter (72) der in Flußverbindung mit einem Härtertank (50) steht.

13. Eine ortsbewegliche, elektrisch betätigte Harzmischmaschine (10) zum Einsatz an Ort und Stelle in einem Kraftwerk, die enthält: Eine Harzquelle (48, 70), eine Härterquelle (50, 72) gekennzeichnet durch Misch- und Ausgabemittel (34), eine Lufteinschließung (12) um die Harz- bzw. Härterquellen (48, 50, 70, 72), Mittel (32, 33, 35), die an die Einschließung (12) angeschlossen sind, um die Temperatur innerhalb der Einschließung (12) zu regeln, Mittel zum Auslösen eines Alarms, wenn die Energieversorgung der Maschine (10) abgeschaltet wird, und Mittel (80) zum Pumpen und Absperren des Harzes (95) bzw. des Härters (96) zwischen der Harz- und der Härterquelle (48, 50, 70, 72) und den Misch- und Ausgabemitteln (34).

## Revendications

1. Machine (10) de mélange et de distribution de résine, comprenant: une source (48, 70) de résine; une source (50, 72) de durcisseur; un moyen (34) pour mélanger et distribuer la résine de durcisseur, caractérisée par un moyen (12) pour enfermer de l'air autour des sources de résine (48, 70) et de durcisseur (50, 72); et un moyen (32, 33, 35) pour régler la température dans le moyen (12) enfermant l'air.

2. Machine (10) selon la revendication 1, caractérisée, en outre, par un réceptacle (74) de résine perdue, une enveloppe (44) pour le réceptacle (74) et un moyen (30, 58) pour évacuer l'air de l'intérieur de l'enveloppe de réceptacle (44).

3. Machine (10) selon la revendication 1, dans laquelle le moyen (12) enfermant l'air comprend: un bâti (46) et une pluralité de panneaux (14) fixés au bâti (46).

4. Machine (10) selon la revendication 1, dans laquelle le moyen (32, 33, 35) de commande de température comprend un conduit (32) d'admission d'air monté entre le moyen (12) enfermant l'air et l'unité de chauffage et de refroidissement (35), et un thermostat (33) à l'intérieur du moyen (12) enfermant l'air raccordé fonctionnellement à l'unité de chauffage et de refroidissement (35).

5. Machine (10) selon la revendication 1, caractérisée, en outre, par un moyen (62) pour fournir une alarme quand la machine (10) cesse d'être alimentée en courant.

6. Machine (10) selon la revendication 5, dans laquelle le moyen d'alarme (62) comprend: une alarme sonore (63) reliée au moyen (12) enfermant l'air et un moyen (68) pour alimenter en courant le moyen d'alarme (62), et dans laquelle lorsque la machine (10) cesse d'être alimentée en courant, le moyen d'alarme (62) est alimenté par le moyen d'alimentation (68) et l'alarme sonore (63) est activée.

7. Machine (10) selon la revendication 1, caractérisée, en outre, par un moyen (20, 22, 23) fixé à la machine (10) pour déplacer cette machine (10).

8. Machine (10) selon la revendication 1, caractérisée, en outre, par un moyen (80) pour le pompage et le réglage d'écoulement de la résine (95) et le durcisseur (96) entre les sources (48, 50, 70, 72) de résine et de durcisseur et le moyen de mélange et de distribution (34).

9. Machine (10) selon la revendication 8, dans laquelle les sources (48, 50, 70, 72) de résine et de durcisseur comprennent un réservoir (70) de résine en communication de fluide avec une cuve (48) de résine et un réservoir (72) de durcisseur en communication de fluide avec une cuve (50) de durcisseur.

10. Machine selon la revendication 9, dans laquelle le moyen (80) de pompage et de réglage d'écoulement par vanne est caractérisé en ce qu'une source (82) de gaz comprimé aboutit au réservoir (70) de résine et au réservoir (72) de durcisseur par l'intermédiaire de première et seconde canalisations (84) et (86) respectivement, chaque première et seconde canalisations (84, 86) comprenant une vanne de fermeture (88, 90), respectivement, qui peut être actionnée indépendamment pour introduire un gaz comprimé dans au moins un des réservoirs (70, 72), une troisième canalisation (92) s'étendant depuis le réservoir (70) de résine jusqu'au réservoir (48) de résine et une quatrième canalisation (94) s'étendant depuis le réservoir (72) de durcisseur jusqu'à la cuve (50) de durcisseur, chaque troisième et quatrième canalisations (92, 94) acheminant sous l'effet d'une pression la résine (95) et le durcisseur (96), respectivement, des réservoirs (70, 72) jusqu'aux cuves (48, 50).

11. Machine (10) selon la revendication 10, dans laquelle les moyens (80) de pompage et de réglage d'écoulement par vanne sont en outre caractérisés par une vanne (98, 100) à commande électronique qui est disposée dans chaque troisième et quatrième canalisations (92, 94) respectivement, et qui commande l'écoulement de la résine et du durcisseur depuis les réservoirs (70, 72) jusqu'aux cuves (48, 50), lesdites vannes (98, 100) étant régulées, par contre-réaction, à partir d'une vanne (102, 104) à flotteur, placée dans chaque cuve (48, 50), et la cuve (48) de résine ainsi que la cuve (50) de durcisseur comprenant une canalisation (106, 108) d'acheminement par gravité s'étendant jusqu'aux pompes (110, 112) à résine et à durcisseur, respectivement, qui mènent jusqu'aux moyens de mélange et de distribution (34).

12. Machine (10) selon la revendication 1, dans laquelle les sources (48, 50, 70, 72) de résine et de durcisseur comprennent: un réservoir (70) de résine en communication de fluide avec une cuve (48) de résine; et un réservoir (72) de durcisseur en communication de fluide avec une cuve (50) de durcisseur.

13. Machine portable (10) de mélange et de distribution de résine alimentée électriquement et destinée à être utilisée sur place dans une centrale électrique, comprenant: une source (48, 70) de résine, une source (50, 72) de durcisseur, caractérisée par un moyen de mélange et de distribution (34), une enceinte (12) d'air entourant les sources (48, 50, 70, 72) de résine et de durcisseur, un moyen (32, 33, 35) raccordé à l'enceinte (12) pour une régulation de la température à l'intérieur de cette enceinte (12), un moyen pour fournir une alarme lorsque le courant fourni à la machine (10) est coupé, et un moyen (80) pour le pompage et la distribution de la résine (95) et du durcisseur (96) entre les sources (48, 50, 70, 72) de résine et de durcisseur et le moyen de mélange et de distribution (34)
